# EUROPÄISCHE PATENTSCHRIFT

(11) **EP 2 182 198 B1**
(45) Veröffentlichungstag und Bekanntmachung des Hinweises auf die Patenterteilung: **12.12.2012**
(21) Anmeldenummer: 09012710.1
(22) Anmeldetag: 07.10.2009
(51) Int. Cl.: F02K 9/34, F17C 1/16

(54) **Druckbehälter für den Hochtemperatureinsatz und ein Verfahren zu deren Herstellung**
Pressure container for high-temperature use and a method for production of same
Récipient sous pression pour l'utilisation à haute température et son procédé de fabrication

(30) Priorität: 03.11.2008 DE 102008054293
(43) Veröffentlichungstag der Anmeldung: 05.05.2010
(73) Patentinhaber: MT Aerospace AG, 86153 Augsburg (DE)
(72) Erfinder: Murawski, Bernd, 86152 Augsburg (DE); Maierhofer, Helmut, 85354 Freising (DE)
(74) Vertreter: Schwarzensteiner, Marie-Luise

(56) Entgegenhaltungen:
- EP-A1- 0 447 349
- GB-A- 1 441 240
- US-A- 3 301 785
- US-A- 3 347 047
- US-A- 3 686 868
- US-A- 3 716 604
- US-A- 4 458 483
- US-A- 4 458 595
- US-A- 5 212 944
- US-A- 5 763 027

## Beschreibung

Die vorliegende Erfindung betrifft Druckbehälter für den Hochtemperatureinsatz und ein Verfahren zu deren Herstellung. Die erfindungsgemäßen Druckbehälter sind wegen ihren Eigenschaften und Qualitäten beispielsweise für Gasflaschen, aber insbesondere als Festtreibstoffbrennkammern von beispielsweise Lenkflugkörpern (LFK) geeignet. Ein derartiger Druckbehälter ist aus der US-PS 3 686 868 bekannt.

Nachfolgend wird die Erfindung hauptsächlich unter Bezugnahme auf Festtreibstoffbrennkammern erläutert. Die Erfindung soll jedoch darauf nicht beschränkt sein. Vielmehr kann sie jeden unter Druck stehenden Behälter betreffen, der sehr hohen mechanischen und thermischen Belastungen ausgesetzt wird oder werden kann.

Ferner soll unter dem Terminus Druckbehälter im Rahmen der vorliegenden Erfindung nicht ausschließlich ein für sich geschlossenes System verstanden werden, sondern auch ein Teil eines solchen unter Druck stehenden Systems, wie Rohrleitungen, Gasflaschenkörper oder Brennkammern, insbesondere für Festtreibstoff.

So muss beispielsweise ein Lenkflugkörper (LFK) zum einen sehr hohe Beschleunigungskräfte und zum anderen enorme Temperaturbelastungen aushalten. Diese hohen Temperaturen entstehen nicht nur im Inneren der Brennkammern durch den Abbrand von Festtreibstoff, sondern auch auf der Außenhaut der Lenkflugkörper. Diese hohen Temperaturen entstehen dort aufgrund der durch die hohen Betriebsgeschwindigkeiten im Überschallbereich erzeugten Luftreibung.

Im Stand der Technik gibt es zahlreiche Ansätze diese Problemstellung zu lösen.

In diesem Zusammenhang ist in der US-PS 3,973,397 ein Raketentriebwerk beschrieben, bestehend aus einem Metallgehäuse und einer auf der Innenseite durch Kleben befestigten Isolierschicht. Die Isolierschicht dient im Wesentlichen dazu, die beim Abbrand des Raketentreibstoffs erzeugte Hitze abzufangen, um das Metallgehäuse zu schützen. Die Isolierschicht ist aus EPDM (Ethylen-Propylen-Dien-Kautschuk) gebildet. Ein Gehäuse aus Metall erfüllt jedoch das Erfordernis der Leichtigkeit des Raketentriebwerks nicht.

Aus der US-PS 5,348,603 ist ein weiterer Aufbau eines Raketentriebwerks bekannt, bestehend aus einem Metallgehäuse und einem die innere Oberfläche des Metallgehäuses auskleidenden Faserverbundwerkstoff. Die Auskleidung mit dem Faserverbundwerkstoff bildet mit dem Metallgehäuse eine Hybridstruktur und ersetzt somit ein Gehäuse, das vollständig aus Metall gebildet ist.

Eine solche Metall-Faserverbund-Hybridstruktur ist aufgrund der vorhandenen Außenhaut aus Metall immer noch sehr schwer. Der Faserverbund gemäß der US-PS 5,348,603 wird darüber hinaus bei Aushärtetemperaturen von ca. 149 °C ausgebildet, was nur vergleichsweise geringe Einsatztemperaturen zulässt.

Ferner wurden im Rahmen der ASRAAM- und VT1-Projekte bereits Lenkflugkörper bekannt, deren Brennkammern aus einem Gehäuse aus kohlenstofffaserverstärktem Kunststoff (CFK) und einer Innenisolation aufgebaut sind. Die Innenisolation besteht aus faserverstärktem EPDM (Ethylen-Propylen-Dien-Kautschuk), in Form von Gummimatten, in welche Kurzfasern eingebracht sind. Die Matrix des CFK ist in üblicher Weise aus einem heiß härtenden Epoxidharzsystem gebildet. Somit lassen die Eigenschaften dieser Materialien einen Betrieb der Lenkflugkörper nur bis zu einer mittleren Temperatur von ca. 160 °C zu.

Unter der mittleren Temperatur ist dabei der Mittelwert des Temperaturverlaufs von der äußeren Oberfläche eines Brennkammergehäuses bis zu seiner inneren Oberfläche zu verstehen. Es ist nämlich möglich, dass kurzzeitig lokale Temperatursprünge von bis zu 400 °C an der Außenhaut der Brennkammern auftreten können. Für einen sicheren Betrieb der Lenkflugkörper wären daher höhere mögliche Einsatztemperaturen wünschenswert.

In der US-A-5,763,027 ist ein Behälter zur Aufnahme von energetisch aktiven Verbindungen beschrieben. Der Behälter umfasst ein Gehäuse, das mit einem Liner ausgelegt ist. Das Gehäuse ist aus einem Faserverbundmaterial aufgebaut, wobei Fasern mit zwei verschiedenen Temperaturbeständigkeitseigenschaften eingesetzt werden, nämlich dynamische und stabile Fasern. Es sind verschiedene Ablagetechniken beschrieben.

Vor dem Hintergrund dieses Standes der Technik ist es Aufgabe der vorliegenden Erfindung einen Aufbau für Druckbehälter, insbesondere für Brennkammern von beispielsweise Lenkflugkörpern vorzusehen, der zugleich den hohen Ansprüchen hinsichtlich mechanischer und thermischer Belastbarkeit sowie Leichtigkeit genügt. Die im Stand der Technik auftretenden Nachteile und Probleme sollen beseitigt werden.

Die erfinderische Tätigkeit bezieht sich somit im Wesentlichen auf die Außenhülle und den Aufbau der darin liegenden Isolierschicht eines Druckbehälters, insbesondere einer Brennkammer für einen Lenkflugkörper oder dergleichen.

Gegenstand der vorliegenden Erfindung ist somit ein Druckbehälter, bestehend aus einem Gehäuse und einer die innere Oberfläche des Gehäuses auskleidenden Isolierschicht, der sich dadurch auszeichnet, dass das Gehäuse aus einem mechanisch und thermisch hochfesten Faserverbundmaterial und die Isolierschicht aus einem gasdichten Siliconelastomer gebildet ist und das Gehäuse und die Isolierschicht haftend verbunden sind.

Die Außenhülle eines solchen Druckbehälters ist somit aus faserverstärktem Kunststoff gebildet, womit das Erfordernis der Leichtigkeit des Gegenstandes voll erfüllt ist.

Ein maßgeblicher Faktor, der diese Leichtigkeit bisher nicht ermöglicht hat, ist der Einsatz einer geeigneten Hochtemperaturmatrix in der die Fasern eingebunden sind. Die Auswahl des erfindungsgemäß eingesetzten Faserverbundmaterials, insbesondere der Harzmatrix konnte dieses Problem beheben. Das Erfordernis der Stabilität des Gehäuses auch im Hochtemperatureinsatz kann somit auch erfüllt werden.

Um das Faserverbundgehäuse vor den hohen Temperaturen zu schützen, die durch den Abbrand des Festtreibstoffes im Inneren der Brennkammer entstehen, ist erfindungsgemäß als Isolierschicht eine Auskleidung aus einem gasdichten Siliconelastomer vorgesehen. Neben der isolierenden Funktion bringt eine solche Siliconauskleidung (Liner) den Vorteil mit sich, dass die Aushärtetemperatur des Harzsystems für die Außenhülle (das Gehäuse) aus faserverstärktem Kunstharz weit höher angesetzt werden kann als bisher. Daraus resultieren gleichermaßen höhere mögliche Einsatztemperaturen für die Druckbehälter.

Ein weiterer Vorteil dieser Siliconauskleidung ist deren Flexibilität. Diese Flexibilität wirkt sich in zweierlei Hinsicht positiv auf die Qualität eines damit ausgerüsteten Druckbehälters aus:.
1. Beim Befüllen wird der in einen Kunststoff eingebettete Treibstoff in flüssiger Form bei Raumtemperatur in die Brennkammer gegossen. Durch das Aushärten dieses Kunststoffs, respektive Harzes findet ein Schrumpf der eingefüllten Treibstoffmasse statt.
   Die erfindungsgemäß eingesetzte Isolierschicht aus dem Siliconelastomer ist in der Lage diesen Schrumpf zu kompensieren und verhindert somit, dass ein Luftspalt zwischen dem Treibstoff, der Siliconauskleidung und der Innenseite des Gehäuses entsteht. Ein Luftspalt zwischen den einzelnen Schichten ist nämlich unbedingt zu vermeiden, weil dadurch die Abbrandeigenschaften des Treibstoffes unkontrollierbar werden können. Ein unkontrollierter Abbrand kann zu einem schlagartigen Druckanstieg in einer Brennkammer führen und einen Lenkflugkörper zerstören.
2. Fasern, die im äußeren Bereich, also später, über die Bespannung aus Silicon gewickelt wurden, werden immer lockerer, je weiter außen sie liegen. Durch die thermische Expansion der Siliconbespannung während der Aushärtung der Faserverbundmatrix werden diese Fasern vorgespannt. Dieser Effekt führt beim fertigen Bauteil dazu, dass ein Lasteintrag effektiver aufgenommen werden kann.

Durch die erfindungsgemäße Kombination eines Gehäuses aus einem mechanisch und thermisch hochfesten Faserverbundmaterial mit einer Auskleidung aus einem gasdichten Siliconelastomer als Isolierschicht, kann ein Brennkammergehäuse für Lenkflugkörper vorgesehen werden, der bei einer mittleren Temperatur um die 200 °C und höher betrieben werden kann. Dadurch steigen nicht nur die möglichen Einsatztemperaturen für einen Lenkflugkörper, sondern auch die Einsatzgeschwindigkeiten und die Einsatzdauer und somit die Reichweite.

Besondere und bevorzugte Ausführungsformen des erfindungsgemäßen Druckbehälters ergeben sich aus den Unteransprüchen 2 bis 10.

Demnach ist das Faserverbundmaterial aus mechanisch und thermisch hochfesten verstärkenden Fasern in einer mechanisch und thermisch hochfesten Harzmatrix aufgebaut. Bestehen sowohl Fasern als auch Matrix aus insbesondere hochtemperaturfesten Materialien, verstärken diese gegenseitig ihre positive Wirkung in Richtung Hochtemperatureinsatz.

Die Fasern werden vorzugsweise aus Glas-, Siliciumcarbid-, Mullit-, Borcarbid-, Aramid- und/oder Carbonaramidfasern, insbesondere bevorzugt Kohlenstofffasern ausgewählt. Diese Aufzählung ist nicht als abschließend aufzufassen.

Das die Harzmatrix bildende Harz ist vorzugsweise ein thermisch härtbares Harz und vorzugsweise ein Polyphenylcyanat. Ein solches Hochtemperaturharz ist beispielsweise unter dem Namen Primaset® PT-30 von der Firma Lonza erhältlich.

Es ist auch ein Faserverbundwerkstoff mit einer keramischen Matrix, beispielsweise auf Basis von Siliciumcarbid, Aluminiumoxid, Mullit oder Kohlenstoff mit einem angepassten Fertigungskonzept denkbar.

Das gasdichte Siliconelastomer ist vorzugsweise ein Peroxid vernetzendes Material mit einer IRHD-Härte von 85 und einer Dehnung von 120%. Es könnte mit Fasern, z. B. Aramidfasern verstärkt sein. Erfindungsgemäß bevorzugt man jedoch eine Füllung mit Quarzpulver oder auch Glas, Keramik. Flammhemmende Mittel, Metall, etc.. Es wird derart gefüllt, dass es eine Dehnbarkeit von noch mindestens 3% aufweist. Die Ausrüstung mit Aramidfasern bzw. dem Quarzpulver,etc. erhöht noch die Hochtemperaturfestigkeit und auch mechanische Festigkeit des Siliconelastomers.

Die Geometrie des erfindungsgemäßen Druckbehälters ist nicht besonders beschränkt. Aufgrund der Einsatzbereiche Gasflaschen und insbesondere Feststoffbrennkammern für Lenkflugkörper und dergleichen ist die Geometrie im Wesentlichen länglich und hohlzylindrisch.

Die vorliegende Erfindung betrifft auch ein Verfahren zur Herstellung eines erfindungsgemäßen Druckbehälters, bei dem zunächst ein Wickeldorn von gewünschter Geometrie mit dem Siliconelastomer bespannt wird, die dem Wickeldorn abgewandte Oberfläche des Siliconelastomers aufgeraut wird, die so aufgeraute Oberfläche des Siliconelastomers zunächst mit einem Haftgrund und dann mit einem Klebefilm versehen wird, die so präparierte Bespannung aus Siliconelastomer durch im Stand der Technik an sich bekannte Methoden mit mechanisch und thermisch hochfesten Fasern aus Glas, Siliciumcarbid, Mullit, Borcarbid, Aramid und/oder Carbonaramid, vorzugsweise Kohlenstoff ummantelt wird, die mit einem thermisch härtbaren Harz, vorzugsweise einem Polyphenylcyanat getränkt sind oder werden und das Harz dann bei Temperaturen von etwa 220 °C ausgehärtet wird.

Zur Bespannung des Wickeldorns mit dem Siliconelastomer liegt dieses in geeigneter Weise in Form eines Schlauches vor, der über den Wickeldorn oder dergleichen Form gestülpt bzw. gezogen wird. Alternativ dazu könnte die Siliconhaut auch direkt auf dem Wickeldorn hergestellt werden, indem vorgefertigte Siliconmatten um den Wickeldorn gelegt und dann direkt vulkanisiert werden. Die Siliconmatten, sogenannte Felle, sind dabei 0,5 mm bis 1 mm stark.

Das Aufrauen der Oberfläche des Siliconelastomers kann mechanisch, chemisch oder beispielsweise durch Plasmaätzen erfolgen. Gegebenenfalls muss nach dem Aufrauen die Oberfläche, beispielsweise durch Spülen mit einem Lösungsmittel (Aceton) gereinigt werden. Der darauf aufgebrachte Haftgrund dient als Haftvermittler bzw. Haftverstärker zwischen der Siliconoberfläche und dem Klebefilm. Es wird beispielsweise "Chemosil" der Fa. Henkel (Deutschland) verwendet. Dabei handelt es sich um ein Elastomerbindemittel, welches organische Polymere in Ethanol enthält.

Der vorgesehene Klebefilm wird in Form eines flüssigen Klebers oder bevorzugt eines Folienklebers oder eines Prepregs aufgebracht. Der Folienkleber ist mit einem Stützgewebe versehen und der Klebstoff lässt sich durch Erwärmen verflüssigen. Das Prepreg weist einen sehr hohen Harzanteil und entsprechend einen geringen Faseranteil auf, wobei die Fasern als Trägergewebe gedacht sind. Folienkleber bzw. Prepregs werden bevorzugt, weil damit eine definierte und gewünschte Klebefilmdicke erreicht werden kann, die sich mit einem flüssigen Kleber nicht im erforderlichen Maße verwirklichen lässt.

Die Ummantelung der Bespannung aus Siliconelastomer mit den Fasern kann in einer besonderen Ausführungsform mit Hilfe der Nasswickeltechnik erfolgen. Dabei werden in an sich bekannter Weise mit dem Hochtemperaturharz getränkte Fasern (in mehreren Schichten) um das Siliconelastomer gewickelt.

Die Ummantelung der Bespannung aus Siliconelastomer kann auch mit Hilfe von Prepregs erfolgen, also mit bereits mit dem Hochtemperaturharz benetzten Fasermatten. Auch die Fasermatten können in mehreren Schichten zur Erzielung einer gewünschten und vom jeweiligen Einsatzbereich abhängigen Wandstärke um das präparierte Siliconelastomer angeordnet werden.

In geeigneter Weise kann die Ummantelung der Bespannung aus Siliconelastomer auch mit trockenen Fasermatten (auch in mehreren Schichten) erfolgen, die anschließend mit dem Hochtemperaturharz in an sich bekannter Weise infiltriert werden.

Das Fasermaterial ist vorzugsweise unidirektional, gekreuzt und/oder multiaxial ausgerichtet und zu einem Schichtaufbau zusammengeführt, wobei die Einzelschichten entsprechend den Belastungen in der Struktur orientiert sind.

Die Methode der Ummantelung mit den Fasern, also der Aufbau des Faserverbundmateriales soll hier nicht besonders beschränkt sein. Vielmehr können alle dem Fachmann bekannten und geeigneten Verfahren verwendet werden.

Ein wesentlicher Bestandteil des erfindungsgemäßen Verfahrens ist die Präparierung der Oberfläche des Siliconelastomers, welche dann mit dem Faserverbund haftend in Verbindung gebracht werden soll. Diese haftende Verbindung zwischen der Isolierschicht und der Innenoberfläche des Gehäuses ist besonders wichtig und spielt neben dem Einsatz eines Siliconelastomers als Innenisolation eine wesentliche Rolle im Rahmen der vorliegenden Erfindung.

Nachfolgend wird die Erfindung unter Bezugnahme auf die Zeichnungen erläutert. Darin zeigt
- Fig. 1: im Querschnitt den Aufbau eines erfindungsgemäßen Druckbehälters am Beispiel einer Brennkammer für einen Lenkflugkörper;
- Fig. 2: einen Längsschnitt durch einen Wickeldorn mit darauf angeordnetem Siliconliner.

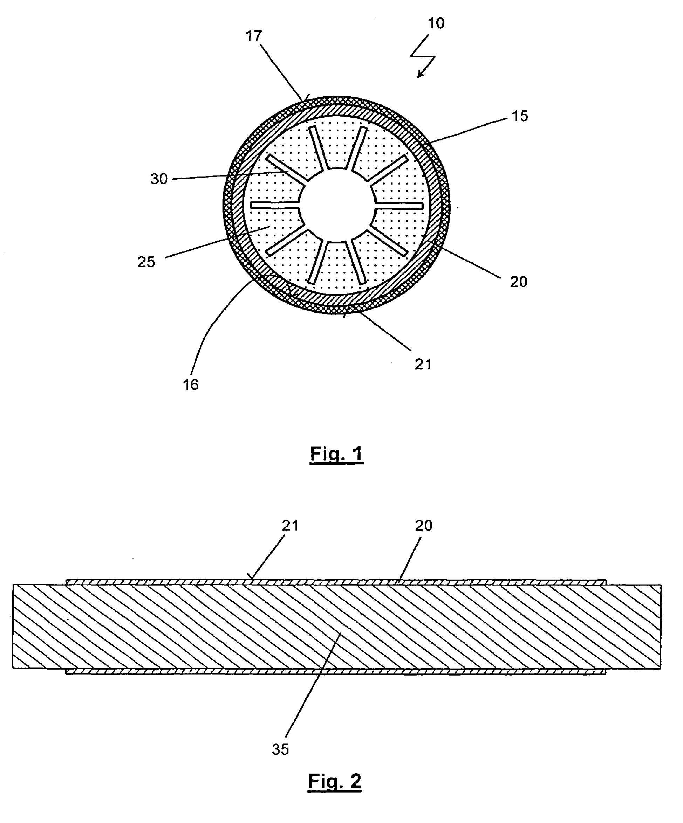

Die Fig. 1 ist damit ein Querschnitt durch eine Feststoffbrennkammer für einen Lenkflugkörper. Der Druckbehälter 10 für eine solche Brennkammer besteht aus dem Gehäuse 15 und der innen liegenden Isolierschicht 20.

Das Gehäuse 15 besteht erfindungsgemäß bevorzugt aus mechanisch und thermisch hochfesten, verstärkenden Fasern, die in einem Hochtemperaturharz als Matrix festgelegt sind. Vorzugsweise handelt es sich um einen kohlenstofffaserverstärkten Kunststoff, CFK. Die Dicke eines solchen CFK-Gehäuses kann abhängig vom Einsatzbereich zwischen 1 mm bis 15 mm liegen. Das Gehäuse 15, somit die Außenhülle des Behälters kann gegebenenfalls und falls erforderlich Metallfittings, wie Steuerelemente oder dergleichen sowie beispielsweise Ventilansätze oder dergleichen integriert enthalten.

Die Isolierschicht 20 besitzt die oben beschriebenen Eigenschaften und Qualitäten. Die zugesetzten Additive sind nicht besonders beschränkt, solange sie die Hochtemperaturstabilität des damit dotierten Materials fördern. Die Dicke der Siliconhaut liegt zwischen 0,5 und 10 mm.

Das Gehäuse 15 und die Isolierschicht 20 sind über ihre angrenzenden Flächen 16 und 21 wie vorher beschrieben haftend miteinander verbunden. Die Haft- und Klebeschicht sind in Figur 1 nicht gezeigt, da sie selbstverständlich im Vergleich zum Gehäuse 15 und der Isolierschicht 20 über eine nur unwesentliche Dicke verfügen.

In dem Behälter ist der Festtreibstoff 25 angeordnet. In den Festtreibstoff 25 sind in der beispielhaften Ausgestaltung sternförmige Kerben 30 unter Ausbildung eines sogenannten Sternbrenners angeordnet. Hierdurch werden die Abbrandeigenschaften des Treibstoffs 25 verbessert, da die Oberfläche des Brennstoffs vergrößert und eine entsprechend schnellere Verbrennung provoziert wird. Diese Ausstattung beschleunigt den Lenkflugkörper, ist jedoch nicht Gegenstand der vorliegenden Erfindung.

Die Fig. 2 zeigt rein schematisch die Ausbildung der Siliconhaut 20 über einem Wickeldorn 35 und die Position der zu präparierenden Oberfläche der Siliconhaut 21.

Abschließend werden nochmals die Vorteile eines erfindungsgemäß gestalteten Druckbehälters, insbesondere einer erfindungsgemäß gestalteten Festtreibstoffbrennkammer zusammengefasst. Diese Vorteile basieren zum einen auf dem Gehäuse aus mechanisch und thermisch hochfestem Faserverbundmaterial und zu anderem auf der Isolierschicht aus gasdichtem gefüllten Siliconelastomer. Diese Merkmale addieren nicht nur die positiven Eigenschaften eines so ausgestalteten Druckbehälters, sondern bewirken einen synergistischen Effekt.

Das Gehäuse aus hochtemperaturfestem Faserverbundmaterial besitzt bei weniger Masse mehr spezifische Steifigkeit, wodurch ein daraus gebildeter Lenkflugkörper über eine höhere Reichweite, höhere Geschwindigkeit und verbesserte Agilität bzw. Wendigkeit aufgrund geringerer Massenträgheit verfügt. Damit erhöht sich auch die Trefferwahrscheinlichkeit.

Der Einsatz eines Hochtemperaturharzes für das Faserverbundgehäuse entschärft die Temperaturprobleme, die sich im Betrieb eines Lenkflugkörpers im Überschallbereich durch die hohe Luftreibung ergeben.

Die Isolierschicht aus Siliconelastomer lässt die hohen Temperaturen zu, die zum Aushärten eines Hochtemperaturharzes für das Faserverbundgehäuse einer Festtreibstoffbrennkammer, aber auch für eine im Hochtemperaturbereich einsetzbare Glasflasche oder dergleichen erforderlich sind. Da die Isolierschicht aus Siliconelastomer gasdicht ist, wird ein unkontrollierter Abbrand des Treibstoffes vermieden. Das Siliconelastomer nimmt den Schrumpf des Festtreibstoffes bei dessen Aushärtung nach dem Einfüllen in den Behälter auf (siehe oben).

Darüber hinaus, und hierin liegt der synergistische Effekt, führt die Verwendung des Siliconelastomers als Isolierschicht zu einer deutlichen Qualitätsverbesserung des Faserverbundgehäuses. Die thermische Expansion der Silicon-Isolierschicht während der Aushärtung der Faserverbundmatrix resultiert nämlich in einer Vorspannung der Faserlagen. Fasern, die im äußeren Bereich, also später, über die Bespannung aus Silicon gewickelt wurden, werden immer lockerer, je weiter außen sie liegen. Durch die thermische Expansion der Siliconbespannung werden diese Fasern gespannt. Dieser Effekt führt beim fertig ausgehärteten Bauteil dazu, dass ein Lasteintrag effektiver aufgenommen werden kann.

## Patentansprüche

1. Druckbehälter (10), bestehend aus einem Gehäuse (15) und einer die innere Oberfläche (16) des Gehäuses (15) auskleidenden Isolierschicht (20), **dadurch gekennzeichnet, dass** das Gehäuse (15) aus einem mechanisch und thermisch hochfesten Faserverbundmaterial, das aus mechanisch und thermisch hochfesten verstärkenden Fasern in einer mechanisch und thermisch hochfesten Harzmatrix aufgebaut ist, und aus einem gasdichten, gefüllten Siliconelastomer als Isolierschicht (20) gebildet ist und das Gehäuse (15) und die Isolierschicht (20) haftend verbunden sind, dergestalt, dass der Druckbehälter bei mittleren Temperaturen von 200°C und höher betreibbar ist.

2. Druckbehälter gemäß Anspruch 1, **dadurch gekennzeichnet, dass** die Fasern aus Glas-, Siliciumcarbid-, Mullit-, Borcarbid-, Aramid- und/oder Carbonaramidfasern ausgewählt sind.

3. Druckbehälter gemäß Anspruch 1, **dadurch gekennzeichnet, dass** die Fasern Kohlenstofffasern sind.

4. Druckbehälter gemäß den Ansprüchen 1 bis 3, **dadurch gekennzeichnet, dass** das die Harzmatrix bildende Harz ein thermisch härtbares Harz ist.

5. Druckbehälter gemäß Anspruch 4, **dadurch gekennzeichnet, dass** das thermisch härtbare Harz ein Polyphenylcyanat ist.

6. Druckbehälter gemäß den Ansprüchen 1 bis 5, **dadurch gekennzeichnet, dass** das Siliconelastomer faserverstärkt oder gefüllt ist.

7. Druckbehälter gemäß Anspruch 6, **dadurch gekennzeichnet, dass** das Siliconelastomer mit Quarzpulver gefüllt ist.

8. Druckbehälter gemäß Anspruch 7, **dadurch gekennzeichnet, dass** das Siliconelastomer eine Dehnbarkeit von mindestens 3% aufweist.

9. Druckbehälter gemäß den Ansprüchen 1 bis 8, **dadurch gekennzeichnet, dass** er eine im Wesentlichen längliche, zylindrische Geometrie besitzt.

10. Druckbehälter gemäß den Ansprüchen 1 bis 9, in Form einer Gasflasche.

11. Druckbehälter gemäß den Ansprüchen 1 bis 9, in Form einer Feststoffbrennkammer für Lenkflugkörper.

12. Verfahren zur Herstellung eines Druckbehälters gemäß einem der Ansprüche 1 bis 11, **dadurch gekennzeichnet, dass**
- zunächst ein Wickeldorn (35) von gewünschter Geometrie mit dem gasdichten Siliconelastomer bespannt wird,
- die dem Wickeldorn (35) abgewandte Oberfläche (21) des Siliconelastomers aufgeraut wird,
- die so aufgeraute Oberfläche (21) des Siliconelastomers zunächst mit einem Haftgrund und dann mit einem Klebefilm versehen wird,
- die so präparierte Bespannung aus dem Siliconelastomer in an sich bekannter Weise mit Fasern ausgewählt aus den Fasern gemäß den Ansprüchen 2 und 3 ummantelt wird, die mit einem Harz gemäß den Ansprüchen 4 oder 5 getränkt sind oder werden und
- das Harz dann bei Temperaturen von etwa 220 °C ausgehärtet wird.

13. Verfahren gemäß Anspruch 12, **dadurch gekennzeichnet, dass** das Aufrauen der Oberfläche (21) des Siliconelastomers mechanisch, chemisch oder durch Plasmaätzen durchgeführt wird.

14. Verfahren nach Anspruch 12 oder 13, **dadurch gekennzeichnet, dass** der Haftgrund eine Haftvermittlerschicht ist.

15. Verfahren nach den Ansprüchen 12 bis 14, **dadurch gekennzeichnet, dass** der Klebefilm in Form eines flüssigen/pastösen Klebers oder bevorzugt eines Folienklebers oder Prepregs aufgebracht wird.

16. Verfahren nach den Ansprüchen 12 bis 15, **dadurch gekennzeichnet, dass** die Ummantelung der Bespannung aus Siliconelastomer mit Fasern mit Hilfe einer Nasswickeltechnik erfolgt.

17. Verfahren nach den Ansprüchen 12 bis 15, **dadurch gekennzeichnet, dass** die Ummantelung der Bespannung aus Siliconelastomer mit Fasern mit Hilfe von Prepregs erfolgt.

18. Verfahren nach den Ansprüchen 12 bis 15, **dadurch gekennzeichnet, dass** die Ummantelung der Bespannung aus Siliconelastomer mit trockenen Fasermatter erfolgt, die anschließend mit dem Harz infiltriert werden.

## Claims

1. Pressure vessel (10), consisting of a housing (15) and a layer of insulation (20) lining the inner surface (16) of the housing (15), **characterised in that** the housing (15) is made from a mechanically and thermally high-strength fibre composite material that is composed of mechanically and thermally high-strength reinforcing fibres in a mechanically and thermally high-strength resin matrix and from a gastight filled silicone elastomer, and the layer of insulation (20) and the housing (15) are adhesively bonded, thus, that the pressure vessel is operable at mean temperatures of 220°C or higher.

2. Pressure vessel according to claim 1, **characterised in that** the fibres are selected from carbon, glass, silicon carbide, mullite, boron carbide, aramide and/or carbon aramide fibres.

3. Pressure vessel according to claim 1, **characterised in that** the fibres are carbon fibres.

4. Pressure vessel according to claims 1 to 3, **characterised in that** the resin forming the resin matrix is a thermally curable resin.

5. Pressure vessel according to claim 4, **characterised in that** the thermally curable resin is a polyphenyl cyanate.

6. Pressure vessel according to claims 1 to 5, **characterized in that** the silicone elastomer is fibre-reinforced or filled.

7. Pressure vessel according to claim 6, **characterised in that** the silicone elastomer is filled with quartz powder.

8. Pressure vessel according to claim 7, **characterised in that** the silicone elastomer has an extensibility of at least 3 %.

9. Pressure vessel according to claims 1 to 8, **characterised in that** it has an essentially longish, cylindrical geometry.

10. Pressure vessel according to claims 1 to 9, in the form of a gas bottle.

11. Pressure vessel according to claims 1 to 9, in the form of a solid fuel combustion chamber for guided missiles.

12. Method for producing a pressure vessel according to one of claims 1 to 11, **characterised in that**
- firstly, a winding spindle (35) of the requisite geometry is lined with the gastight silicone elastomer (20),
- the surface (21) of the silicone elastomer (20) facing away from the winding spindle (35) is roughened,
- the roughened surface (21) of the silicone elastomer is provided, firstly, with a primer and then with a film of glue,
- the silicone elastomer lining thus prepared by the methods known as such is sheathed with fibres according to claims 2 and 3, which have been or will be impregnated with a resin according to claims 4 or 6, and
- the resin is then cured at temperatures of approximately 220° C.

13. Method according to claim 12, **characterised in that** the roughening of the surface (21) of the silicone elastomer (20) is conducted mechanically, chemically or by plasma etching.

14. Method according to claim 12 or 13, **characterised in that** the primer is a layer of bonding agent.

15. Method according to claims 12 to 14, **characterised in that** the film of glue is applied in the form of a liquid/paste adhesive or preferably an adhesive film or prepreg.

16. Method according to claims 12 to 15, **characterised in that** the silicone elastomer lining is sheathed with fibres using a wet winding technique.

17. Method according to claims 12 to 15, **characterised in that** the silicone elastomer lining is sheathed with fibres with the aid of a prepreg.

18. Method according to claims 12 to 15, **characterised in that** the silicone elastomer lining is sheathed using dry fibre mats, which are then infiltrated with the resin in the manner of prior art.

## Revendications

1. Récipient à pression (10), composé d'un boîtier (15) et d'une couche isolante (20) revêtant la surface intérieure (16) du boîtier (15), **caractérisé en ce que** le boîtier (15) est formé d'un matériau composite à fibres à haute résistance mécanique et thermique, constitué de fibres de renforcement à haute résistance mécanique et thermique, placées dans une matrice de résine à haute résistance mécanique et thermique, la couche isolante (20) est formée d'un élastomère au silicone muni d'une charge et étanche aux gaz, et le boîtier (15) et la couche isolante (20) sont reliés par adhésion, au point que le boîtier (15) est opérable à des températures moyennes de 220°C ou plus.

2. Récipient à pression selon la revendication 1, **caractérisé en ce que** les fibres sont sélectionnées parmi les fibres de carbone, de verre, de carbure de silicium, de mullite, de carbure de bore, d'aramide et/ou de carbone aramide.

3. Récipient à pression selon la revendication 1, **caractérisé en ce que** les fibres sont des fibres de carbone.

4. Récipient à pression selon les revendications 1 à 3, **caractérisé en ce que** la résine formant la matrice en résine est une résine thermodurcissable.

5. Récipient à pression selon la revendication 4, **caractérisé en ce que** la résine thermodurcissable est du polyphényl cyanate.

6. Récipient à pression selon les revendications 1 à 5, **caractérisé en ce que** l'élastomère au silicone est renforcé par des fibres ou muni d'une charge.

7. Récipient à pression selon la revendication 6, **caractérisé en ce que** l'élastomère au silicone est chargé avec de la poudre de quartz.

8. Récipient à pression selon la revendication 7, **caractérisé en ce que** l'élastomère au silicone présente une extensibilité d'au moins 3 %.

9. Récipient à pression selon les revendications 1 à 8, **caractérisé en ce qu'**il présente une géométrie cylindrique, sensiblement allongée.

10. Récipient à pression selon les revendications 1 à 9, ayant la forme d'une bouteille de gaz.

11. Récipient à pression selon les revendications 1 à 9, ayant la forme d'une chambre de combustion à combustible solide, pour des missiles guidés.

12. Procédé de fabrication d'un récipient à pression selon l'une des revendications 1 à 11, **caractérisé en ce que**:
- d'abord, un mandrin de bobinage (35), ayant la géométrie souhaitée, est revêtu de l'élastomère au silicone (20) étanche aux gaz,
- la surface (21), opposée au mandrin de bobinage (35), de l'élastomère au silicone (20) est rendue rugueuse,
- la surface (21), ainsi rendue rugueuse, de l'élastomère au silicone est d'abord munie d'une base d'adhérence et, ensuite, munie d'un film adhésif,
- le revêtement en élastomère au silicone ainsi préparé est enveloppé, de manière connue en soi, avec des fibres selon les revendications 2 et 3, imbibées ou allant être imbibées avec une résine selon les revendications 4 ou 6,
- la résine est ensuite durcie à des températures d'à peu près 220° C.

13. Procédé selon la revendication 12, **caractérisé en ce que** l'opération, visant à rendre rugueuse la surface (21) de l'élastomère au silicone (20), est effectuée de manière mécanique, chimique ou par gravure au plasma.

14. Procédé selon les revendications 12 ou 13, **caractérisé en ce que** la base d'adhérence est une couche d'agent de pontage.

15. Procédé selon les revendications 12 à 14, **caractérisé en ce que** le film adhésif est appliqué sous la forme d'un adhésif liquide/pâteux, ou, de préférence d'un adhésif en feuille ou de préimprégnés.

16. Procédé selon les revendications 12 à 15, **caractérisé en ce que** l'enveloppement du revêtement en élastomère au silicone avec des fibres est effectué avec une technique de bobinage humide.

17. Procédé selon les revendications 12 à 15, **caractérisé en ce que** l'enveloppement du revêtement en élastomère au silicone avec des fibres est effectué à l'aide de préimpégnés.

18. Procédé selon les revendications 12 à 15, **caractérisé en ce que** l'enveloppement du revêtement en élastomère au silicone avec des fibres est effectué avec des matelas de fibres secs, infiltrés ensuite, de manière connue en soi, avec le résine.
